(19) **Europäisches Patentamt**

**European Patent Office**

**Office européen des brevets**

(11) Veröffentlichungsnummer : **0 467 018 B1**

(12) **EUROPÄISCHE PATENTSCHRIFT**

(45) Veröffentlichungstag der Patentschrift :
**18.11.93 Patentblatt 93/46**

(21) Anmeldenummer : **91105670.3**

(22) Anmeldetag : **10.04.91**

(51) Int. Cl.⁵ : **C02F 1/56**

(30) Priorität : **18.07.90 DE 4022795**

(43) Veröffentlichungstag der Anmeldung :
**22.01.92 Patentblatt 92/04**

(45) Bekanntmachung des Hinweises auf die
Patenterteilung :
**18.11.93 Patentblatt 93/46**

(84) Benannte Vertragsstaaten :
**AT BE CH DE DK ES FR GB GR IT LI LU NL SE**

(56) Entgegenhaltungen :
**EP-A- 0 237 122**
**EP-A- 0 386 838**
**AT-B- 379 791**
**DE-A- 3 707 909**
**DE-A- 3 709 353**

(54) Verfahren zum Detoxifizieren von Wasser.

(73) Patentinhaber : **RÜTGERSWERKE**
**AKTIENGESELLSCHAFT**
**Mainzer Landstrasse 217**
**D-60326 Frankfurt (DE)**

(72) Erfinder : **Riede, Ursus, Prof. Dr.**
**Bifänge 89**
**W-7800 Freiburg (DE)**
Erfinder : **Seubert, Bernhard**
**Meisenweg 15**
**W-6803 Edingen-Neckarhausen 1 (DE)**
Erfinder : **Usener, Hans Uwe, Dr.**
**Merzhauser Str. 3**
**W-7800 Freiburg (DE)**
Erfinder : **Gubbe, Ute**
**Karlsruherstr. 99**
**W-6834 Ketsch (DE)**

**EP 0 467 018 B1**

Jouve, 18, rue Saint-Denis, 75001 PARIS

**Beschreibung**

Die Erfindung betrifft ein neues Verfahren zum Detoxifizieren von mit toxischen Stoffen belastetem Wasser.

Wasser in Oberflächengewässern wie Flüssen, Bächen, Seen oder Teichen ist der Lebensraum für eine Vielzahl von Pflanzen und Tieren und bildet mit ihnen ein sehr empfindliches Ökosystem, bei dem Störungen eines Faktors gravierende Auswirkungen auf das ganze System haben können.

Ein gravierender Störfaktor ist die Belastung der Gewässer mit toxischen Substanzen, die teils kontinuierlich über belastetes Grund- oder Deponiewässer oder sporadisch bei nicht vermeidbaren Unglücksfällen als unbehandeltes Ab- oder Löschwasser in die bestehenden Gleichgewichte eingreift.

Es wird verschiedentlich versucht, derartigen Gewässern durch Behandeln mit die Wasserqualität verbessernden Mitteln zu helfen, etwa durch Ausfällen von Schwermetallen oder durch Oxidation organischer Schadstoffe. Derartige Hilfen setzen jedoch voraus, daß es sich um bestimmte, analytisch genau erfaßte Schadstoffe handelt, die jeweils spezifisch bekämpft werden müssen. Zudem wird zur analytischen Erfassung der Schadstoffe viel Zeit benötigt, Zeit die dann für schnelle Hilfsmaßnahmen verloren ist.

Es ist daher die Aufgabe der Erfindung, universell einsetzbare Verfahren bereitzustellen, mit denen mit Schadstoffen belastete Gewässer mit hoher Wahrscheinlichkeit rasch detoxifiziert werden und bei denen durch die Behandlung keine neue Belastung des Gewässers erfolgt.

Die Lösung der Aufgabe erfolgt durch Verfahren gemäß der Ansprüche 1 bis 3.

Es ist bekannt, daß Wässer aus Moorgebieten von besonders guter Qualität sind. Diese sogenannten Schwarzwässer zeichnen sich durch eine ausgewogene Mikroflora und -fauna aus. Die Resistenz dieser Wässer gegen Schadstoffe ist höher als die Resistenz von Wässern anderer Provenienz.

Aus dieser Erkenntnis her werden Torf-, Moor- oder Braunkohlen-Extrakte oder -Konzentrate als Wasserpflegemittel, vorwiegend im Aquarienbereich eingesetzt. Trotz aller Anstrengungen gelingt es aber damit nicht, die günstigen Eigenschaften des Schwarzwassers herzustellen, geschweige denn, mit Schadstoffen belastete Gewässer ausreichend zu detoxifizieren.

Es wurde gefunden, daß die Wassereigenschaften von Oberflächengewässern enorm verbessert werden, wenn diesen Wässern niedermolekulare Huminstoffe zugesetzt werden. Insbesondere wird die Resistenz gegen Schadstoffeintrag deutlich erhöht. Die Wässer werden bereits durch geringe Mengen an niedermolekularen Alkalihuminaten (0,5 bis 100 ppm/l) wirkungsvoll detoxifiziert, wobei sich die Wirkung sowohl bei toxischen anorganischen Verbindungen (Schwermetallen) als auch bei organischen Schadstoffen (Herbiziden, Pestiziden oder polycyclischen Aromaten) zeigt.

Daraus ergibt sich das erfindungsgemäße Verfahren zum Detoxifizieren von schadstoffbelastetem Wasser durch Zugabe eines Mittels, das niedermolekulare Alkalihuminate enthält. Dabei wird soviel dieses die Wasserqualität verbessernden Mittels zugegeben, daß das schadstoffbelastete Wasser 0,5 bis 100 ppm, bevorzugt 10 bis 50 ppm niedermolekulare Alkalihuminate pro Liter enthält. Diese Menge ist ausreichend, um eine mehr als hundertfach höhere Konzentration an Schadstoffen zu detoxifizieren.

Erfindungsgemäß einsetzbar und wirksam sind sowohl natürliche niedermolekulare Alkalihuminate, wie sie aus DE-A 37 07 909 oder DE-A 37 36 623 bekannt sind, als auch synthetisch durch Oxidation von mehrwertigen Phenolen in schwach alkalischem wäßrigem Medium entsprechend DE-A 37 07 910 hergestellte niedermolekulare Alkalihuminate. Es sind dies dunkelbraune, wasserlösliche Produkte mit einem mittleren Molekulargewicht von 1.000, bei einem Streubereich von 300 bis 1.500.

Bei Versuchen zur Ökotoxizität dieser niedermolekularen Alkalihuminate wurde überraschenderweise gefunden, daß sie die aquatische Toxizität von Schwermetallen, von Bioziden, insbesondere von Pestiziden und Herbiziden deutlich mindert. Es wurde eine zum Teil erhebliche Überlebensdauer und eine Verbesserung der LC 50 bei Daphnia magna beobachtet. Darüber hinaus wurde eine sehr positive Wirkung auf das Wachstum von Wasserpflanzen gefunden. Veralgungen und Pilzbefall wurden bei Anwesenheit von niedermolekularen Alkalihuminaten im Gegensatz zu unbehandelten Wässern nicht beobachtet.

Die erfindungsgemäß eingesetzten Mittel können diese niedermolekularen Alkalihuminate als einzigen Wirkstoff enthalten. Aus Gründen der leichteren Anwendbarkeit der Mittel, liegen die niedermolekularen Alkalihuminate als wäßrige Lösung mit 2 bis 20 Gew.-% an niedermolekularen Alkalihuminaten vor. Es ist jedoch auch möglich, die erfindungsgemäßen Mittel in fester Form herzustellen und zu lagern und erst kurz vor Gebrauch in Wasser zu lösen.

Neben den niedermolekularen Alkalihuminaten können die erfindungsgemäß eingesetzten Mittel ein oder mehrere zusätzliche an sich bekannte, detoxifizierend wirkende Substanzen beinhalten, wie z. B. adsorbierende Stoffe, Ionenaustauscher oder komplexbildende Substanzen.

Die niedermolekularen Alkalihuminate können darüberhinaus an feste Trägermaterialien gebunden sein, wie dies aus DE-A 37 09 353 bekannt ist. Bei der Zugabe dieses Mittels zu schadstoffbelastetem Wasser wirken die niedermolekularen Alkalihuminate entsprechend detoxifizierend, während die dann freiwerdenden Trägermaterialien mit polaren Schadstoffen Komplexe bilden.

**Beispiele**

Der Ausdruck LC 50 bezeichnet die Konzentration eines Stoffes in Wasser, die nach der angegebenen Zeit bei 50 % der getesteten Lebewesen (Daphnia magna) lethal wirkt.

Beispiel 1

Toxizitäten verschiedener Huminstoffe gegenüber Daphnia magna, geprüft nach OECD-Richtlinie:

| Huminstoff | LC 50 nach 6 h |
|---|---|
| Natürliches niedermolekulares Alkali-huminat gemäß DE-A 37 07 909 | 2.500 mg/l |
| Synthetisches niedermolekulares Al-kalihuminat gemäß DE-A 37 07 910 | 2.800 mg/l |
| Braunkohleextrakt | 280 mg/l |
| Moorbreiextrakt | 1.100 mg/l |
| Torfextrakt | 980 mg/l |

Beispiel 2

Überlebensdauer und Verbesserung der akuten Toxizität an Daphnia magna bei Einsatz von niedermolekularen Alkalihuminaten im Vergleich zu Torfextrakt:

a) Natürliches niedermolekulares Alkalihuminat gemäß DE-A 37 07 909

| Schadstoff | Menge Schadstoff | Menge Huminat | Über- lebensdauer [h] | LC 50 [mg/l] nach 6 h |
|---|---|---|---|---|
| Cadmium- chlorid | 1 mg/l | 0 ppm 20 ppm | 0,2 2 | 0,5 1,5 |
| Bleiacetat | 5 mg/l | 0 ppm 20 ppm | 0,5 5 | 2,5 5,7 |
| Quecksilber- 1-chlorid | 3 mg/l | 0 ppm 20 ppm | 0,5 1 | 0,5 2,2 |
| Parathion | 4 mg/l | 0 ppm 20 ppm | 0,2 > 24 | 0,5 > 10 |
| Atrazin | 4 mg/l | 0 ppm 20 ppm | 0,5 3,5 | 2 15 |

b) Synthetisches niedermolekulares Alkalihuminat gemäß DE-A 37 07 910

| Schadstoff | Menge Schadstoff | Menge Huminat | Über- lebensdauer [h] | LC 50 [mg/l] nach 6 h |
|---|---|---|---|---|
| Cadmium- chlorid | 1 mg/l | 0 ppm 20 ppm | 0,2 3 | 0,5 2,5 |
| Bleiacetat | 5 mg/l | 0 ppm 20 ppm | 0,5 7 | 2,5 8,2 |
| Quecksilber- 1-chlorid | 3 mg/l | 0 ppm 20 ppm | 0,5 1,5 | 0,5 2,8 |
| Parathion | 4 mg/l | 0 ppm 20 ppm | 0,2 > 24 | 0,5 > 10 |
| Atrazin | 4 mg/l | 0 ppm 20 ppm | 0,5 5 | 2 18 |

c) Torfextrakt

| Schadstoff | Menge Schadstoff | Menge Huminat | Über-lebensdauer [h] | LC 50 [mg/l] nach 6 h |
|---|---|---|---|---|
| Cadmium-chlorid | 1 mg/l | 0 ppm<br>50 ppm | 0,2<br>0,6 | 0,5<br>0,5 |
| Bleiacetat | 5 mg/l | 0 ppm<br>50 ppm | 0,5<br>1 | 2,5<br>3,0 |
| Quecksilber-1-chlorid | 3 mg/l | 0 ppm<br>50 ppm | 0,5<br>0,5 | 0,5<br>0,5 |
| Parathion | 4 mg/l | 0 ppm<br>50 ppm | 0,2<br>0,2 | 0,5<br>0,5 |
| Atrazin | 4 mg/l | 0 ppm<br>50 ppm | 0,5<br>0,5 | 2<br>2,2 |

**Patentansprüche**

1. Verfahren zum Detoxifizieren von Wasser durch Zugabe eines die Wasserqualität verbessernden Mittels zu schadstoffbelastetem Wasser, **dadurch gekennzeichnet,** daß das Mittel im wesentlichen niedermolekulare Alkalihuminate neben ggf. anderen Wirkstoffen enthält.

2. Verfahren nach Anspruch 1, **dadurch gekennzeichnet,** daß dem Wasser soviel des die Wasserqualität verbessernden Mittels zugegeben werden, daß es 0,5 bis 100 ppm niedermolekulare Alkalihuminate pro Liter enthält.

3. Verfahren nach den Ansprüchen 1 und 2, **dadurch gekennzeichnet,** daß dem Wasser soviel des die Wasserqualität verbessernden Mittels zugegeben werden, daß es 10 bis 50 ppm niedermolekulare Alkalihuminate pro Liter enthält.

## Claims

1. A process for the detoxification of water by the addition to pollutantcharged water of an agent which improves the quality of the water, **characterized in that** the agent essentially contains low-molecular alkali huminates optionally in addition to other active substances.

2. A process according to Claim 1, **characterized in that** so much of the agent improving the quality of the water is added to the water that it contains from 0.5 to 100 ppm of low-molecular alkali huminates *per* litre.

3. A process according to Claims 1 and 2, **characterized in that** so much of the agent improving the quality of the water is added to the water that it contains from 10 to 50 ppm of low-molecular alkali huminates *per* litre.


## Revendications

1. Procédé pour la détoxication de l'eau par addition d'un agent améliorant la qualité de l'eau à de l'eau contaminée par des polluants, caractérisé en ce que l'agent contient essentiellement, outre éventuellement d'autres substances actives, des humates alcalins de bas poids moléculaire.

2. Procédé selon la revendication 1, caractérisé en ce que l'on ajoute à l'eau une quantité de l'agent améliorant la qualité de l'eau telle qu'elle contienne 0,5 à 100 ppm d'humates alcalins de bas poids moléculaire par litre.

3. Procédé selon les revendications 1 et 2, caractérisé en ce que l'on ajoute à l'eau une quantité de l'agent améliorant la qualité de l'eau telle qu'elle contienne 10 à 50 ppm d'humates alcalins de bas poids moléculaire par litre.